# EUROPEAN PATENT APPLICATION

(11) **EP 1 564 551 A1**
(43) Date of publication of application: **17.08.2005**
(21) Application number: 04002941.5
(22) Date of filing: 10.02.2004
(51) Int. Cl.: G01N 27/82, G01N 27/90

(54) **Non-destructive method for the detection of creep damage in ferromagnetic parts with a device consisting of an eddy current coil and a hall sensor**

(71) Applicant: Alstom Technology Ltd, 5400 Baden (CH)
(72) Inventor: Germerdonk, Klaus, Dr., 5408 Ennetbaden (CH); Kern, Rolf, Dr., 66571 Eppelborn-Dirmingen (DE); Denk, Josef, 79790 Küssaberg (DE); Lawin, Nils, 5408 Ennetbaden (CH); Kopp, Harald, 66646 Berschweiler (DE)

(57) **Abstract**

Non-destructive method for the detection of creep damage present in ferromagnetic power plant components. First a measurement device consisting of an eddy current coil and a hall sensor with a magnetisation joke is manufactured. The measurement device is calibrated with tensile calibration specimens with defined creep strain by measuring the most significant NDT (non-destructive techniques) relevant measured properties (e.g. multi-frequency eddy current, upper harmonics analysis of tangential magnetic field strength, incremental permeability and Barkhausen noise). A multi-regression method is used for the correlation between NDT relevant measured properties and the defined creep strain. The calibrated measurement device is used for measurement of the creep strain present in said power plant components.

## Description

### TECHNICAL FIELD

The invention relates to a non-destructive method of quantifying creep damage in ferromagnetic power plant components.

### STATE OF THE ART

High efficient modern gas turbine power plants are operating at conditions which result in very high rotor temperature and high mechanical loading. As a consequence the creep load of the rotors is one of the design and lifetime limiting factors. Therefore the actual increase in creep strain at highly loaded rotor locations during the operating period has to be monitored and measured. It is state of the art to detect creep damage in the tertiary creep range by using metallographic methods. However most of the life-time is then consumed. A high demand exists for a non-destructive measurement to detect early creep damage in power plant applications. There are several physical properties reported in the literature, which are sensitive to increasing creep strain and can therefore in principle be utilised for a non-destructive technique. The creep strain can be correlated to the following properties of material:
- Geometric elongation of a component due to increased creep strain;
- Metallurgical analysis on samples taken by replica technique. Different stages of creep damages can be identified due to increased density of pores;
- Ultrasound velocity;
- Ultrasonic techniques utilise the density and modulus change on the propagation speed of waves;
- Micromagnetic and conductive properties;
- The creep strain levels influence the interaction of domain wall with material discontinuities. As a consequence magnetic properties changes with changing creep level;

So far all of these principles show strong limitations if they are utilised for practical industrial applications to detect early creep damage in power plant components. Typical requirements in power plant components (e.g. gas turbine rotors) are:
- The non-destructive technique (NDT) should be sensitive to early creep damages (creep strains between 0.2% up to 3%);
- The technique should be applicable to complex and high curvature components like the steeple grooves of fire tree geometry of rotors with high stress/strain gradients;
- Different surface conditions should not affect the measurement e.g. related to oxide scales, mechanical damages due to mounting/dismounting of blades etc;
- The measurement technique should be fast and easy to handle in typical outage situation on site.

EP-A1-0 683 393 and DE-C1-42 35 387 disclose different non destructive methods for measuring the material properties which involves using the magnetic Barkhausen noise effect. However, there are no NDT techniques available by now, which fulfils all of the above mentioned requirements. Furthermore, no reliable quantitative measurements were possible due to the following hurdles/constraints:
- Changes in magnetic and conductive properties are rather small and not consistent, no simple one-parameter calibration will produce sufficiently stable results;
- Magnetic and conductive properties are very sensitive to surface conditions, which may change for each measurement dependent on the position and as well on the operating time;
- Highly creep loaded areas are often located in areas with high surface curvature. Access of measurement equipment is here limited. Also limited is the availability of calibration samples with same surface curvature and defined creep strain rates.

### SUMMARY OF INVENTION

It is object to the present invention to find a non-destructive method for the detection of creep damage in power plant components made of ferromagnetic steels like gas turbine rotors. This should be especially valid for the detection of early creep damage with a creep strain between 0.2% and 3%.

This object is solved by a method of measuring the magnetic and conductive properties utilising a specific sensor design which adapts a so-called 3MA (micromagnetic-, multi-parameter-, microstructure- and stress analysis) system. The device has to be calibrated by performing a specific calibrating procedure.

The inventive method comprises the steps of manufacturing of a probe consisting of an eddy current coil and a hall sensor with a magnetise joke adapted to the location of interest (e.g. the narrow curved and highly stress-loaded area of a fire tree steeple) and manufacturing of curved and flat calibration specimens with defined creep strain and with different surface conditions. Suitable creep laws and Finite Element (FE)-methods were applied to calculate the required creep loading conditions to produce the calibration specimen. Once the system is calibrated it can be used to measure the creep strain on ferromagnetic steel components made of the same material and curvature as present in the calibration specimen. The probe with eddy current coil and hall sensor and the magnetise joke are integrated into a blade foot for an easy and safe realisation of the measurements.

Further embodiments of the invention are written in the dependent claims.

### SHORT SUMMARY OF DRAWINGS

The invention is illustrated by the accompanying drawings, in which
- **Fig. 1**: shows a specific electromagnetic probe for testing of curved and flat surfaces integrated in a blade foot ;
- **Fig. 2a, b**: reveals quantitative system results on flat tensile specimen with different surface conditions and
- **Fig. 3**: indicates quantitative system results for curved specimen based on a calibration performed on a flat specimen.

The enclosed drawings show only the parts important for the present invention.

### PREFERRED EMBODIMENT OF THE INVENTION

The invention relates to a method for the non-destructive measurement for creep strain and creep strain rates (with repeated measurements of creep strain) present in ferromagnetic power plant components. Highly creep loaded parts are for example gas turbine rotors. Depending on the design and operating condition a gas turbine rotor may show several areas with high creep loading conditions. With respective mechanical stress, temperature and operating time this loading condition will lead to an increasing creep strain. Increasing creep strain could finally cause to catastrophic rotor failure. To ensure a safe lifetime of the component direct measurement of creep strain is therefore of great importance. Also the inventive non-destructive measurement technique offers the option to monitor the actual status of the rotor and thus to maximise the safe operating period. The general influence of the creep strain on the micromagnetic and conductive properties is reported in the literature [e.g. Laboratory Non-destructive Evaluation Technology for Material Characterization, R.B. Thompson, Journal of Non-destructive Evaluation, Vol. 15, Nos. 3/4, 1996].

The inventive measurement application utilises a so-called 3MA (micromagnetic-, multi-parameter-, microstructure- and stress analysis) system. This system was originally developed for non-destructive measurements of hardness and residual stresses [see e.g. Non-destructive characterisation of material (ultrasonic and micromagnetic techniques) for strength and toughness prediction and the detection of early creep damage, G. Dobmann et. al, Nuclear Eng. and Design 157 (1992) 137 -158]. Such a so called 3MA system is a portable system consisting of following modules:
- Probe with combined eddy current coil and hall sensor including a magnetise joke,
- Feeding and conditioning unit with high sensitivity and high stability,
- Computer based data analysis unit and display unit.

The system fully exploits the capabilities of a multiple-frequency eddy current techniques and micromagnetic analysis unit for material characterisation, based on the evaluation of even quite small differences in the electrical conductivity values and magnetic properties.

The idea of applying this technique to quantitative creep strain measurements relies on an assumption strengthened by initial tests, i.e. the possibility to perform a necessary combined calibration on flat, curved and corrugated specimen. The initial tests indicate also a possibility to suppress the influence of different surface condition to the measurement by using calibration samples with different surface conditions such as grid blasted, ground, scratched.

For practical application a proper and safe data acquisition is required even on highly curved surfaces. Additionally surface conditions typical for serviced components should be not affecting the accuracy of the measurement.

By combining significant micromagnetic parameters with eddy current parameters in a multiregression approach the measurements can be correlated to the actual creep strain. First a specific 3MA probe suitable for localised measurements on flat and as well on curved surfaces (e.g. in a groove of a fire tree steeple) is designed and constructed. For calibrating the measurement device flat tensile calibration specimens as well as curved calculation specimens with same surface curvatures as the steeple geometry with defined creep strain rates are used. For determining the creep strain rates within the calibration samples extensive Finite Element and Creep law calculations have been performed. The surface conditions of calibration samples should be typical for serviced components to be measured.

The most significant measured properties have to be identified by performing Multi-regression data analysis based on most significant measured properties derived from electromagnetic non-destructive techniques like multi-frequency eddy current, upper harmonics analysis of tangential magnetic field strength, incremental permeability and Barkhausen noise. The creep strain present in said ferromagnetic power plant components can be measured non-destructively after a preceding a calibration step. With the inventive method early creep damage with a creep strain between 0.2% and 3% can be detected and measured.

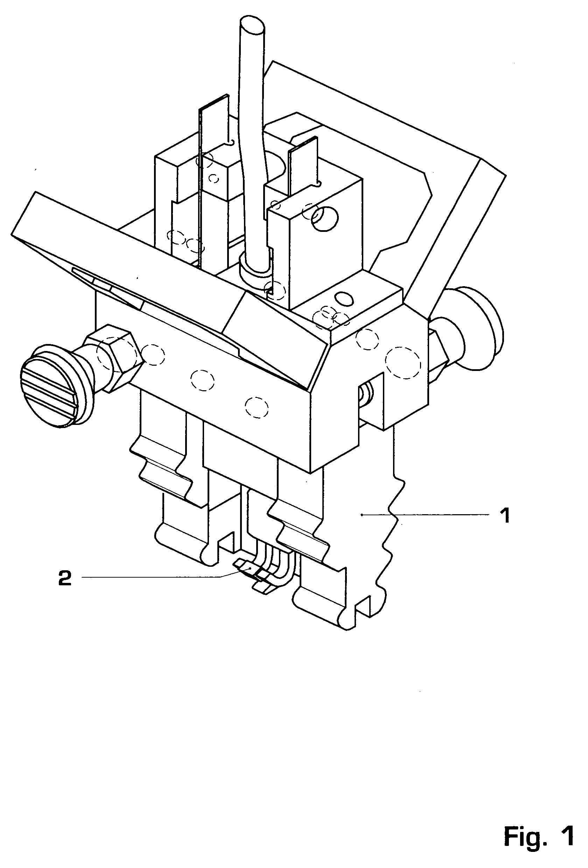

The 3MA sensor consists of a u-shaped electromagnetic yoke for dynamic magnetization of test specimen at the measurement location. Between the poles of the electromagnet the measurement signals of the various techniques are received simultaneously by a pick up coil and a hall probe. An embodiment of a principle design of a probe is shown in Fig. 1. The probe is integrated into a blade foot 1, which ensures a proper positioning of the sensors and protects the sensitive sensor 2.

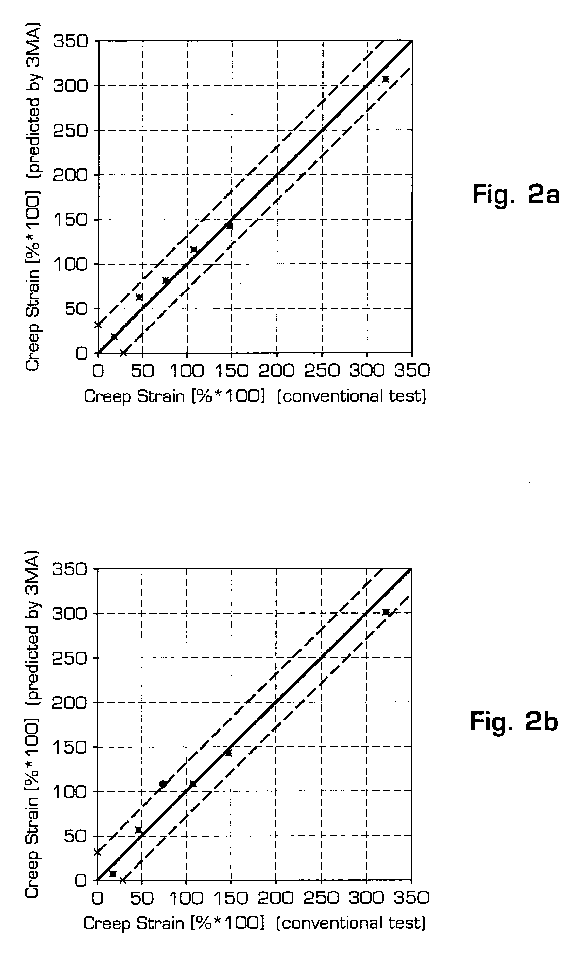

Quantitative results for flat tensile specimens are given in Fig. 2 a, b. There are shown non-destructively determined creep strain values (predicted by 3MA) versus conventionally determined creep strain values. The result in Fig. 2 a was achieved by a calibration procedure of the system on 6 flat specimens, the result in Fig. 2 b represents the same procedure on 5 flat specimens (without specimen 76, nominal creep strain 0.76 %). Afterwards the entire set of 6 flat specimens was measured and the respective creep strains calculated. Fig. 2 b shows the quantitative results. The performance of the system to perform quantitative creep strain measurements is demonstrated for specimen 76 which was not used for calibration process. The calibration was based on a multi-regression analysis.

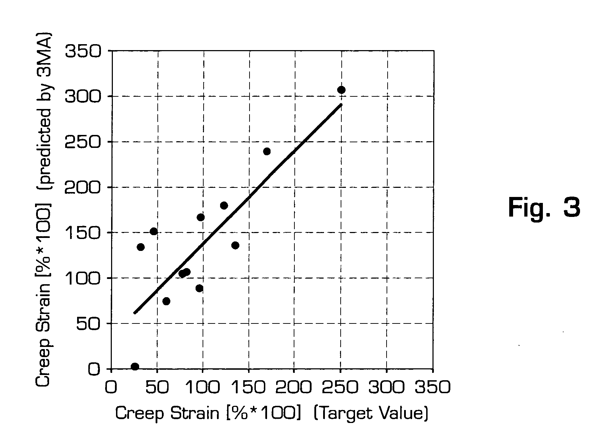

The calibrated system is also able to measure local creep strain in curved surfaces. Fig. 3 shows the quantitative results on curved specimen based on a calibration on flat specimens. The system accuracy can even be increased by a combined calibration on flat and curved specimens.

While our invention has been described by an example, it is apparent that one skilled in the art could adopt other forms. Accordingly, the scope of our invention is to be limited only by the attached claims.

### REFERENCE NUMBERS

- 1: Blade foot
- 2: Sensor

## Claims

1. A non-destructive method for the detection of creep damage present in ferromagnetic power plant components, the method comprising the steps of
(a) manufacturing of a measurement device consisting of an eddy current coil and a hall sensor with a magnetise joke;
(b) calibrating the measurement device by
- producing of tensile calibration specimen with defined creep strain;
- measuring the most significant measured properties with the measurement device of the tensile calibration specimen and
- analysing the obtained data using a multi-regression method based on the defined creep strain and
(c) using the calibrated measurement device for measurement of the creep damage present in said ferromagnetic power plant components.

2. The method according to claim 1, comprising the step of producing of different surface conditions typical for serviced components on the calibration samples.

3. The method according to claim 2, comprising the step of producing of flat, curved and/or corrugated surfaces of the calibration samples and calibrating.

4. The method according to claim 2 or 3, comprising the step of suppressing the influence of different surface condition to the measurement by using calibration samples with different surface conditions.

5. The method according to any of the claims 1 to 4, comprising the step of identifying of the most significant measured properties prior to the application of the method according to claim 1.

6. The method according to any of the claims 1 to 5, comprising the step of measuring the early creep damage with a creep strain between 0.2% and 3%.

7. The method according to any of the claims 1 to 6, comprising the step of measuring the creep strain of a gas turbine rotor.

8. The method according to claim 7, comprising the step of integrating the measurement device with the eddy current coil and the hall sensor including the magnetise joke into a blade foot (1) for an easy and safe realisation of the measurements.
